# EUROPÄISCHE PATENTSCHRIFT

(11) **EP 1 217 338 B1**
(45) Veröffentlichungstag und Bekanntmachung des Hinweises auf die Patenterteilung: **02.04.2008**
(21) Anmeldenummer: 02004185.1
(22) Anmeldetag: 27.07.1998
(51) Int. Cl.: G01F 1/58

(54) **Verfahren zum Zusammenbau einer Elektrodenanordnung für magnetisch-induktive Durchflussaufnehmer**
Method of assembling an electrode arrangement for magneto-inductive flow sensors
Procédé d'assemblage d'un arrangement d'électrodes pour débitmètres magnéto-inductifs

(43) Veröffentlichungstag der Anmeldung: 26.06.2002
(62) Teilanmeldung aus: 98114000.7
(73) Patentinhaber: Endress + Hauser Flowtec AG, 4153 Reinach BL 1 (CH)
(72) Erfinder: Graf, Oliver, 4447 Känerkinden (CH); Schoohf, Michael, 4153 Reinach (BL) (CH)
(74) Vertreter: Andres, Angelika Maria

(56) Entgegenhaltungen:
- EP-A- 0 766 069
- GB-A- 2 047 409
- US-A- 3 177 709
- US-A- 4 517 846

## Beschreibung

Die Erfindung betrifft ein Verfahren zum Zusammenbau einer Elektrodenanordnungen für magnetisch-induktive Durchflußaufnehmer.

Mit magnetisch-induktiven Durchflußmessern läßt sich bekanntlich der Volumendurchfluß von elektrisch leitfähigen Flüssigkeiten messen. Die Messung beruht auf dem Faradayschen Induktionsgesetz. Die Flüssigkeit wird durch ein Magnetfeld geschickt, so daß in ihr eine elektrische Spannung induziert wird, die mittels mindestens zweier Elektrodenanordnungen abgegriffen wird.

Die Mittel zur Führung der Flüssigkeit in Form eines Meßrohrs, zur Erzeugung des Magnetfelds, die Elektrodenanordnungen und gegebenenfalls weitere Komponenten bilden den magnetisch-induktiven Durchflußaufnehmer.

Das Meßrohr muß mindestens im Bereich des Magnetfelds innen aus einem Isoliermaterial bestehen, damit die induzierte Spannung nicht kurzgeschlossen wird. Deshalb werden metallische Meßrohre innen mit einem geeigneten Isoliermaterial beschichtet.

Metall-Meßrohre dürfen ferner nicht aus ferromagnetischem Material bestehen, damit das mittels einer außerhalb des Meßrohrs angeordneten Spulenanordnung erzeugte Magnetfeld die Flüssigkeit erreichen und durchsetzen kann. Meist werden die metallischen Meßrohre daher aus Edelstahl hergestellt, deren Außenfläche somit rostfrei ist und meist nicht weiters behandelt zu werden braucht.

Eine Elektrodenanordnung umfaßt eine Meßelektrode mit einem Kopf und einem Schaft, die in einer Bohrung der Wand des Meßrohrs so fixiert wird, daß sie ihr gegenüber elektrisch isoliert ist. Diese Isolation muß sehr gut sein, weil die induzierte Spannung nur kleine Werte in der Größenordnung von 1 mV hat und deren Innenwiderstand in der Größenordnung von 100 kΩ liegen kann.

Als Maß für die Güte der Isolation dient üblicherweise der Ohmsche Isolationswiderstand, der zwischen der Meßelektrode und dem Meßrohr existiert. Bei trockenen Verhältnissen liegen üblicherweise Werte des Isolationswiderstands in der Größenordnung von 100 MΩ vor.

Es hat sich nun gezeigt, daß diese Werte im Betrieb der Durchflußaufnehmer sich bis in die Größenordnung des Innenwiderstands der induzierten Spannung verschlechtern können, wodurch diese auf ca. die Hälfte vermindert wird. Untersuchungen der Erfinder ergaben, daß dies hauptsächlich dann auftritt, wenn das Meßrohr kälter als die Umgebungsluft ist. Diese gelangt nämlich gewöhnlich in ein die Elektroden-Anordnungen umgebendes Gehäuse, selbst wenn dieses ausgeschäumt ist.

Es schlägt sich somit auf dem Meßrohr, insb. in der Nähe der Meßelektroden, Feuchtigkeit nieder, was bis zur Bildung von Wassertröpfchen führen kann. Die Feuchtigkeit kriecht nun infolge von Kapillarkräften in allfällig bestehende Spalte, die einerseits zwischen den Meßelektroden und der Isolierung und andererseits zwischen der Isolierung und dem Meßrohr bestehen. Ferner können sich durch Adhäsionswirkung Feuchtigkeitsfilme auf äußeren Oberflächen der Isolierung und der Meßelektroden bilden.

Es ist daher eine Aufgabe der Erfindung, die Erniedrigung des Isolationswiderstands der Meßelektroden mittels konstruktiver Ausbildung der Elektrodeanordnung zu vermeiden.

Die Aufgabe wird erfindungsgemäß gelöst durch ein Verfahren gemäß Anspruch 1. Weiterführende Ausgestaltuneng der Erfindung sind in den davon abhängigen Ansprüchen aufgezeigt.

Ein Vorteil der Erfindung besteht darin, daß dadurch, daß sich kein Flüssigkeitsfilm auf dem hydrophoben Formkörper ausbilden kann, die Verringerung des Isolationswiderstands vermieden und die induzierte Spannung nicht abgeschwächt wird. Daher treten ferner auch keine Langzeitschwankungen des Isolationswiderstands auf, die zu Störspannungen führten, die der induzierten Spannung überlagert wären.

Die Erfindung wird nun anhand der Figuren der Zeichnung näher erläutert, in der bevorzugte Ausführungsbeispiele dargestellt sind.
- Fig. 1: zeigt teilweise im Längsschnit eine erste Elektrodenanordnung, und
- Fig. 2: zeigt teilweise im Längsschnit zwei Varianten einer zweiten Elektrodenanordnung.

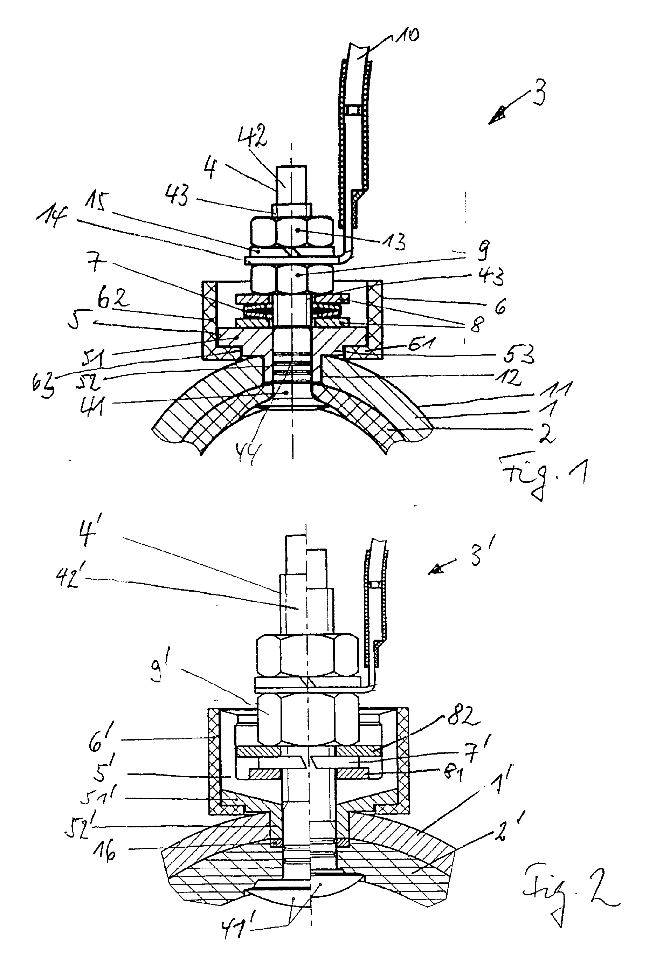

Bei der in Fig. 1 teilweise im Längsschnit gezeigten ersten Elektrodenanordnung ist diese in einem bereits in ein Meßrohr 1 eines magnetisch-induktiven Durchflußaufnehmers eingebauten Zustand dargestellt. Vom Meßrohr 1 ist nur ein elektroden-naher Teil dargestellt, und es besteht aus einem metallischen, nicht-ferromagnetischen Material, insb. aus einem Edelstahl.

Das Meßrohr 1 ist innen mit einem Isoliermaterial 2 versehen, das eines der für diesen Zweck in der Technik der magnetisch-induktiven Durchflußmesser üblichen Materialien sein kann, also z.B. Polytetrafluorethylen, Hartgummi, Weichgummi etc. Im Ausführungsbeispiel der Fig. 1 ist Polytetrafluorethylen als Isoliermaterial 2 vorausgesetzt. Eine Außenfläche 11 des Meßrohrs 1 ist bei dessen Fertigung unbehandelt gebleiben, also blank.

Eine Elektrodenanordnung 3 umfaßt eine Meßelektrode 4 mit einem Kopf 41 und mit einem Schaft 42, der einen kleineren Durchmessers als der Kopf 41 hat und mit einem Außengewinde 43 versehen ist. Die Meßelektrode 4 ist in einer Bohrung 12 einer Wand des Meßrohrs 1 mittels eines Isolierkörpers 5 eingesetztt, so daß Meßelektrode 4 und Meßrohr 1 elektrisch voneinander isoliert sind.

Der Isolierkörper 5 hat einen scheiben-förmigen Teil 51 und einen rohrförmigen, in die Bohrung 12 passenden Ansatz 52. Der scheiben-förmige Teil 51 hat einen Durchmesser der größer als der Außen-Durchmesser des Ansatzes 52 ist. Der Ansatz 52 ist etwas kürzer als die Wand des Meßrohrs 1 dick ist. Wenn die Meßelektrode 4 dagegen endgültig eingebaut ist, wie es in Fig. 1 dargestellt ist, reicht der Ansatz 52 bis zum Isoliermaterial 2, da dieses durch den Kopf 41 gegen die Wand des Meßrohrs 1 gepreßt wird. Dadurch wird der zwischen dem Ende des Ansatzes 52 und der Außenfläche des Meßrohrs 1 zunächst bestehende Hohlraum ausgefüllt.

Ein zylindrisches Formteil 6 hat einen Boden 61 und einen Wandteil 62 und besteht aus einem elektrisch isolierenden, hydrophoben Material; hierfür ist Perfluoralkoxy ganz besonders gut geeignet. Im Boden 61 befindet sich eine Zentralöffnung 63 mit einem Durchmesser, der kleiner als der Durchmesser des scheiben-förmigen Teils 51 des Isolierkörpers 5 ist. Somit greift der Boden 61 unter den scheiben-förmigen Teil 51 und läßt sich gegen die Außenfläche 11 des Meßrohrs 1 drücken.

Wie in Fig. 1 dargestellt ist, kann der scheiben-förmige Teil 51 so abgestuft ausgebildet sein, daß ein unterer Stutzen 53 einen Durchmesser hat, der dem Durchmesser der Zentralöffnung entspricht, so daß der Stutzen 53 in diese genau hineinpaßt. Die Dicke des Stutzens 53 ist etwas kleiner als die Dicke des Bodens 61, so daß dieser im fertigen Zustand, wie erwähnt, sicher gegen die Außenfläche 11 des Meßrohrs 1 gepreßt wird.

Der Wandteil 62 des Formteils 6 hat einen InnenDurchmesser, der leicht größer als der Durchmesser des scheiben-förmigen Teils 51 ist. Somit paßt dieser in das Formteil 6 hinein.

Die Elektrodenanordnung 3 umfaßt ferner noch ein Federteil 7, das hier ein doppelseitig wirkendes Federelement ist, zwei Unterlegscheiben 8 und eine Mutter 9. Die Komponenten der Elektrodenanordnung 3 werden wie folgt und in der angegebenen Reihenfolge zusammengebaut:
Zunächst wird die Meßelektrode 4 von innen durch die Bohrung 12 des Meßrohrs 1 gesteckt; in dieser hält sie sich selbst. Am unteren Teil des Schaftes 42 angebrachten Rillen 44 dienen der Unterscheidbarkeit von verschiedenen, für die Meßelektrode 4 verwendeten Materialien, wie z.B. der Edelstahl 1.4435, der Edelstahl Hast C 22, ein Chrom-Nickel-Stahl, eine Platin-Rhodium-Legierung mit 20 Atom% Rhodium oder Tantal etc.

Dann werden das Formteil 6 und der Isolierkörper 5 auf den Schaft 42 geschoben und der Ansatz 52 in der Bohrung 12 zentriert. Nun wird eine der beiden Unterlegscheiben 8 auf den Schaft 42 und darüber das Federteil 7 und darüber die zweite der Unterlegscheiben 8 geschoben. Schließlich wird die Mutter 9 aufgeschraubt und so angezogen, daß das Federteil 7 unter Druckspannung gesetzt ist.

Durch diese Druckspannung wird einerseits der Boden 61 des Formteils 6 gegen die Außenfläche 11 des Meßrohrs 1 gedrückt und andererseits wird der Kopf 41 der Meßelektrode 4 fest gegen das Polytetrafluorethylen als Isoliermaterial 2 gezogen und bildet eine kleine Vertiefung darin.

Daher ist der Kopf 41 gegen die im Meßrohr 1 strömende Flüssigkeit sicher abgedichtet, und der außerhalb des Meßrohrs 1 befindliche Teil der Elektrodeannordnung 3 ist gegen Feuchte geschützt, die z.B. von der Außenfläche 11 des Meßrohrs 1 zur Meßelektrode 4 zu kriechen sucht. Ferner wird vom hydrophoben Formteil 5 sicher verhindert, daß sich ein Kondenswasserfilm zwischen der Außenfläche 11 und der Meßelektrode 4 aufbauen kann.

In Fig. 1 ist noch im fertigen Zustand dargestellt, wie die Elektrodenanordnung 3 mit einer elektrischen Zuleitung 10 verbunden werden kann. Hierzu dienen eine weitere Mutter 13, eine Lötöse 14, mit der die Zuleitung 10 verlötet ist, und ein Sprengring 15. Diese Teile sind wie dargestellt auf dem Gewinde 43 der Meßelektrode 4 durch Anziehen der Mutter 13 befestigt.

In Fig. 2 sind teilweise im Längsschnit zwei Varianten einer zweiten Elektrodenanordnung 3' dargestellt, und zwar derart, daß von der einen Variante nur die linke Hälfte und von der anderen Variante nur die rechte Hälfte zu sehen ist. In Fig. 2 sind nur solche Bezugszeichen von Fig. 1 wiederholt, die zur Erläuterung von Fig. 2 erforderlich sind. Es werden nur noch die Unterschiede der Fig. 2 im Vergleich zu Fig. 1 erläutert.

Die linke Variante unterscheidet sich von der rechten dadurch, daß die linke Variante für größere Nennweiten als die rechte Variante gedacht ist, so daß die Meßelektrode 4' länger und das Isoliermaterial 2' dicker ausgebildet ist.

Bei beiden Varianten ist als Isoliermaterial 2' Hart- oder Weichgummi vorausgesetzt. Daher bedarf der Kopf 41' eines Dichtrings 16 aus Polytetrafluorethylen. Dieser ist unterhalb des Ansatzes 52' in die Bohrung der Wand des Meßrohrs 1', die sich etwas in das Isoliermaterial 2' hinein erstreckt, eingesetzt und trägt zur Abdichtung des Kopfes 41' und der angrenzenden Teile des Schaftes 42' der Meßelektrode 4' bei.

Der Isolierkörper 5' ist hier der gesamten Innenkontur des Formteils 6' angepaßt, d.h. er reicht bis zur Oberkante des letzteren. In diesem Bereich ist der Isolierkörper 5' ferner mehrfach geschlitzt ausgebildet. Als Federteil 7' ist anstatt eines doppelseitigen Federelements wie in Fig. 1 ein Sprengring vorgesehen. Beide Arten von Federteilen sind natürlich gegeneinander austauschbar.

Die Komponenten der Elektrodenanordnung 3' werden wie folgt und in der angegebenen Reihenfolge zusammengebaut:
Zunächst wird die Meßelektrode 4' von innen durch die Bohrung des Meßrohrs 1' gesteckt; in dieser hält sie sich selbst. Dann werden in den Isolierkörper 5' eine Unterlegscheibe 81 der Sprengring 7' und eine weitere Unterlegscheibe 82 eingesetzt, die durch . Darauf werden das Formteil 6' und anschließend der wie eben beschrieben vorbereitete Isolierkörper 5' auf den Schaft 42' geschoben. Schließlich wird die Mutter 9' aufgeschraubt und so angezogen, daß der Sprengring 7' unter Druckspannung gesetzt ist.

## Patentansprüche

1. Verfahren zum Zusammenbau einer Elektrodenanordnung (3) eines magnetisch-induktiven Durchflußaufnehmers, welches Verfahren folgende Schritte umfaßt:
- eine einen Kopf (41) und einen Schaft (42) aufweisende Meßelektrode (4) wird von innen durch eine Bohrung (12) einer Wand eines innen mit einem Isoliermaterial (2) versehenen Meßrohrs (1) des Durchflußaufnehmers gesteckt, und
- ein einen Boden (61), einen Wandteil (62) sowie eine sich im Boden (61) befindende Zentralöffnung aufweisendes Formteil (6) aus einem hydrophoben Material sowie ein einen scheiben-förmigen Teil (51) und einen in die Bohrung (12) passenden Ansatz (52) aufweisender Isolierkörper (5) werden auf den Schaft (42) aufgeschoben und so fixiert, daß der Boden (61) des Formteils (6) von außen und der Kopf (41) der Meßelektrode (4) von innen gegen die Wand des Meßrohrs (1) gedrückt gehalten sind.

2. Verfahren gemäß Anspruch 1, weiters umfassend folgende Schritte:
- Aufschieben eines Federteils (7) auf den Schaft (42) der Meßelektrode (4) und
- Aufschrauben einer Mutter (9) auf den Schaft (42) zum Erzeugen einer Formteil (6) und Meßelektrode (4) gegen die Wand des Meßrohrs (1) drückenden Druckspannung im Federteil (7).

3. Verfahren gemäß Anspruch 1, weiters umfassend folgende Schritte:
- Aufschieben eines Sprengrings (7') auf den Schaft (42) der Meßelektrode (4) und
- Aufschrauben einer Mutter (9) auf den Schaft (42) zum Erzeugen einer Formteil (6) und Meßelektrode (4) gegen die Wand des Meßrohrs (1) drückenden Druckspannung im Sprengring (7').

4. Verfahren gemäß Anspruch 2 oder 3, wobei durch die Druckspannung einerseits der Boden (61) des Formteils (6) gegen eine Außenfläche (11) des Meßrohrs (1) gedrückt wird und andererseits der Kopf (41) der Meßelektrode (4) fest gegen das Isoliermaterial (2) gezogen wird.

5. Verfahren gemäß einem der vorherigen Ansprüche, wobei das Formteil (6) aus Perfluoraloxy besteht.

6. Verfahren gemäß einem der vorherigen Ansprüche, wobei es sich bei dem für die die Meßelektrode (4) verwendeten Material um eines der folgenden handelt: Edelstahl 1.4435, Edelstahl Hast C 22, einen Chrom-Nickel-Stahl, eine Platin-Rhodium-Legierung mit 20 Atom% Rhodium. Tantal.

7. Verfahren gemäß einem der vorherigen Ansprüche, wobei das Isoliermaterial aus einem der folgenden Materialien besteht: Polytetrafluorethylen, Hartgummi, Weichgummi.

## Claims

1. Method for assembling an electrode arrangement (3) of a magnetic induction flow sensor, which method comprises the following steps:
- a measuring electrode (4), having a head (41) and a shaft (42), is inserted from inside through a hole (12) in a wall of a measuring tube (1) of the flow sensor, which measuring tube is provided with an insulating material (2) on the inside,
and
- a moulding (6) made from a hydrophobic material and having a base (61), a wall portion (62) and a central opening located in the base (61), and also an insulating body (5) having a disc-shaped portion (51) and having a neck (52) that fits into the hole (12) are slipped onto the shaft (42) and secured such that the base (61) of the moulding (6) is held pressed against the wall of the measuring tube (1) from outside and the head (41) of the measuring electrode (4) is held pressed against the wall of the measuring tube (1) from inside.

2. Method according to claim 1, further comprising the following steps:
- a spring component (7) is slipped onto the shaft (42) of the measuring electrode (4), and
- a nut (9) is screwed onto the shaft (42) to generate, in the spring component (7), a compressive stress that presses the moulding (6) and the measuring electrode (4) against the wall of the measuring tube (1).

3. Method according to claim 1, further comprising the following steps:
- a snap ring (7') is slipped onto the shaft (42) of the measuring electrode (4), and
- a nut (9) is screwed onto the shaft (42) to generate, in the snap ring (7'), a compressive stress that presses the moulding (6) and the measuring electrode (4) against the wall of the measuring tube (1).

4. Method according to claim 2 or 3, wherein the compressive stress causes, on the one hand, the base (61) of the moulding (6) to be pressed against an outer face (11) of the measuring tube (1) and, on the other hand, the head (41) of the measuring electrode (4) to be pulled snugly against the insulating material (2).

5. Method according to any one of the preceding claims, wherein the moulding (6) is made from perfluoroalkoxy.

6. Method according to any one of the preceding claims, wherein the material used for the measuring electrode (4) is one of the following: stainless steel 1.4435, stainless steel Hast C-22, a chromium-nickel steel, a platinum-rhodium alloy with 20 atom % rhodium, tantalum.

7. Method according to any one of the preceding claims, wherein the insulating material is one of the following materials: polytetrafluoroethylene, hard rubber, soft rubber.

## Revendications

1. Procédé destiné à l'assemblage d'un dispositif d'électrode (3) d'un débitmètre magnéto-inductif, lequel procédé comprend les étapes suivantes :
- une électrode (4) présentant une tête (41) et une tige (42) est introduite depuis l'intérieur à travers un perçage (12) d'une paroi d'un tube de mesure (1) du débitmètre, tube dont l'intérieur est pourvu d'une matière isolante (2), et
- une pièce moulée (6) présentant un fond (61), une partie de paroi (62) ainsi qu'une ouverture centrale se trouvant dans le fond (61), constituée d'une matière hydrophobe, ainsi qu'une partie en forme de disque (51) et un corps isolant (5) présentant un épaulement (52) s'adaptant dans le perçage (12), sont engagés sur la tige (42) et fixés de telle sorte que le fond (61) de la pièce moulée (6) est maintenu pressé de l'extérieur, et la tête (41) de l'électrode (4) est maintenue pressée de l'intérieur contre la paroi du tube de mesure (1).

2. Procédé selon la revendication 1, comprenant en outre les étapes suivantes :
- engagement d'une pièce élastique (7) sur la tige (42) de l'électrode de mesure (4) et
- engagement d'un écrou (9) sur la tige (42) pour la création d'une contrainte de compression visant à presser une pièce moulée (6) et l'électrode de mesure (4) contre la paroi du tube de mesure (1), dans la pièce élastique (7).

3. Procédé selon la revendication 1, comprenant en outre les étapes suivantes:
- engagement d'un circlips (7') sur la tige (42) de l'électrode de mesure (4) et
- engagement d'un écrou (9) sur la tige (42) pour la création d'une contrainte de compression visant à presser une pièce moulée (6) et l'électrode de mesure (4) contre la paroi du tube de mesure (1), dans le circlips (7').

4. Procédé selon la revendication 2 ou 3, pour lequel le fond (61) de la pièce moulée (6), d'une part, est pressé par la tension de compression contre une surface extérieure (11) du tube de mesure (1) et, d'autre part, la tête (41) de l'électrode de mesure (4) est tirée fermement contre la matière isolante (2).

5. Procédé selon l'une des revendications précédentes, pour lequel la pièce moulée (6) est en perfluoroalkoxy (PFA).

6. Procédé selon l'une des revendications précédentes, pour lequel il s'agit, concernant le matériau utilisé pour l'électrode de mesure (4), d'un des matériaux suivants : un acier inoxydable 1.4435, un acier inoxydable Hast C 22, un acier au chrome-nickel, un alliage platine-rhodium avec 20 % d'atomes de rhodium ou de tantale.

7. Procédé selon l'une des revendications précédentes, pour lequel la matière isolante se compose de l'une des matières suivantes : polytétrafluoréthylène (PTFE), caoutchouc dur, caoutchouc tendre.
